# EUROPEAN PATENT SPECIFICATION

(11) **EP 0 782 474 B1**
(45) Date of publication and mention of the grant of the patent: **08.08.2001**
(21) Application number: 95930560.8
(22) Date of filing: 20.09.1995
(51) Int. Cl.: B01J 3/02, B65G 53/46

(54) **METHOD AND APPARATUS FOR FEEDING SOLID MATERIAL INTO A PRESSURIZED SPACE**
METHODE UND VORRICHTUNG ZUM EINFÜHREN EINES FESTSTOFFS IN EINEN DRUCKRAUM
PROCEDE ET APPAREIL POUR L'INTRODUCTION D'UNE MATIERE SOLIDE DANS UN VOLUME SOUS PRESSION

(30) Priority: 22.09.1994 FI 944385
(43) Date of publication of application: 09.07.1997
(73) Proprietor: Fortum Power and Heat Oy, 00100 Helsinki (FI)
(72) Inventor: HULKKONEN, Seppo, FIN-00750 Helsinki (FI); HEINONEN, Olli, FIN-01370 Vantaa (FI)
(74) Representative: Hovi, Simo
(86) International application number: FI9500515
(87) International publication number: WO9609113

(56) References cited:
- EP-A- 0 431 639
- WO-A-93/00282
- DE-A- 4 306 326
- US-A- 4 142 868
- US-A- 4 604 019

## Description

The present invention relates to a method according to the preamble of claim 1 for feeding solid fuel such as coal or peat into a pressurized boiler, dryer or other pressurized space.

The method also concerns an apparatus according to the preamble of claim 6 suited for implementing the method.

Different types of pressurized burning methods and dryers have gained an important position in energy generating processes burning solid fuels. Pressurization offers improved efficiency, and in fact, pressurization is frequently a prerequisite for the operation and economy of modern energy generating methods.

Pressurization causes a plurality of technical problems related to need for maintaining the pressurized spaces tightly sealed and hindering the pressure from escaping and preventing the materials and reaction products from flowing to the environment or other stages of the process. These requirements are particularly difficult to fulfill when the process must be fed with solid fuel from a space of lower pressure. As the pressure of solid fuel cannot be elevated in the same fashion as that of gases or liquids, special actions must be taken to feed solid fuel over a pressure differential. Particularly difficult fuels to handle are peat and other fuels of organic origin such as straw, bark and wood chips, because they resist flowing and have a low specific weight, which makes their transport by gravity unreliable.

A variety of different types of feeders and conveyors have been developed for the handling of solid fuels. Of these, briquette presses and auger or ram auger feeders are suited for special applications and typically for relatively low pressures only. Pulverized material of relatively good flowing property can be fed by means of different pneumatic methods utilizing gate chambers and similar arrangements. A shortcoming of these approaches is their limited suitability for fine-pulverized materials only as well as the high consumption of the transport carrier medium and the pumps, blowers and other equipment required in pneumatic methods of material transport, all of these contributing to the increased costs of such a system. For these reasons, the feed of solid fuels to a space of high pressure is principally implemented using different types of compartment and gate feeders.

Gate feeders may have one or more gate chambers which are filled from a storage chute. At the start of the feed cycle, the gate chamber is rotated to the outlet opening of the storage chute and the gate chamber is allowed to become filled with the material flowing from the storage chute. After the gate chamber is full, it is transferred to the solids inlet connection to the pressurized space and is emptied using compressed air, the ram movement of a piston or simply by gravity flow. The gate chamber may be pressurized prior to its connection with the pressurized space.

The US Pat. No. 4,037,736 discloses a gate feeder having two vertical feed cylinders with a piston in each for feeding solid material into a vertical solids upflow retort vessel used for the treatment of oil-containing materials. The feed cylinders are adapted side by side on horizontal linear guides and fill chutes are provided symmetrically to both sides of the retort. In this fashion one of the feed cylinders may be emptied into the retort, while the other chamber is being filled, whereby the efficiency of the apparatus is improved. The drawbacks of this apparatus are related to its slow operating speed caused by the linear motions, and due to the gravity fill, the bridging tendency of the material during the filling step of the feed cylinder. The bridging tendency in the chute is strongly dependent on the material being fed rendering this apparatus ill suited for feeding peat and similar materials.

The Finnish laid-out publication 85,186 discloses an apparatus having two gate chambers from which the material being fed is discharged into the pressurized space by means of a piston adapted into the chamber. The chambers are mounted onto a base plate having an inlet opening and an outlet opening for filling and discharging the chambers. The chambers are transferred the inlet opening to the outlet opening and *vice versa* by rotating the chambers. A special characteristic of the apparatus is that the gate chamber is maintained sealed during the transfer step, while the pressure of the chamber is simultaneously elevated to the prevailing pressure of the pressurized space by means of compressed gas fed into the chamber. The material to be fed is loaded into the gate chamber by means of an auger conveyor and gravity. The chief shortcoming of this apparatus is the heavy wear of the base plate and the seals adapted between the base plate and a body member arranged to be rotatable with respect to the body plate. The wear is caused by the pressure elevation of the filled gate chamber during the rotation step of the chamber. Here, the imposed pressure pushes the base plate away from the body piece with a high force and the material contained in the chamber abrades the base plate, whereby the bearings and seals of the chamber construction are subjected to heavy stresses. Furthermore, the material to be fed easily becomes located between the body piece and the base plate thus increasing the wear and requiring more torque to rotate the chamber. The progress of the wear is rapid, because wear increases the clearance between the sealed sliding joint between the base plate and the body piece, whereby more and more material being fed can enter between the sealing surfaces.

It is an object of the present invention to achieve a method based on a piston-actuated feed cylinder capable of reducing the wear of the feeder and the pressure transients imposed on the feeder apparatus.

According to a preferred embodiment of the invention, the high-pressure side of the feeder apparatus is provided with a gate valve capable of providing the desired function of the invention.

The goal of the invention is accomplished by reducing the gate chamber pressure prior to moving the gate chamber to the position corresponding to the pressure level preceding the filling step of the chamber.

According to a preferred embodiment of the invention, the pressure of the gate chamber is kept at a lower pressure during the filling step and transfer to the feeding step to the pressurized space and, after the transfer step, the chamber pressure is elevated just prior to the connection of the chamber to the pressurized space.

More specifically, the method according to the invention is characterized by what is stated in the characterizing part of claim 1.

Furthermore, the apparatus according to the invention is characterized by what is stated in the characterizing part of claim 6.

The invention offers significant benefits.

The method according to the invention is capable of significantly reducing the wear of the feeder apparatus without complicating the construction of the apparatus. As the chamber pressure is kept at the ambient pressure during the chamber transfer step, less torque is required to rotate the chambers, which facilitates a construction of lighter weight thus reducing the stresses imposed on the feeder structures. The operation of the feeder is relatively fast, which permits the use of moderate volume gate chambers even when large amounts of fuel must be fed. The elevation and lowering of chamber pressure can be implemented by means of feed piston movements, whereby no separate gas inlet channels are required. This contributes to lower operating costs of the feeder apparatus. The fill side of the feeder apparatus may be complemented with an auger conveyor for filling the gate chamber, whereby fail-safe filling of the gate chamber is assured and no risk of fuel bridging or plugging can occur as is the case in gravity filling. In such an arrangement, the feeder apparatus is advantageously provided with a horizontal design. The wear of the feeder apparatus is further reduced by the use of a lubricating/ sealing and flushing liquid. The use of the lubricating liquid also prevents gas leaks to the surroundings. Owing to the gate valve construction, pressure leaks from the pressurized space are reduced.

In the following the invention is described in greater detail with the help of the annexed drawings in which
Figure 1 shows diagrammatically a feeder apparatus according to the invention;
Figure 2 shows the sliding gate valve of the feeder apparatus illustrated in Fig. 1; and
Figures 3a - 3d elucidate the different operating steps of the feeder apparatus illustrated in Fig. 1.

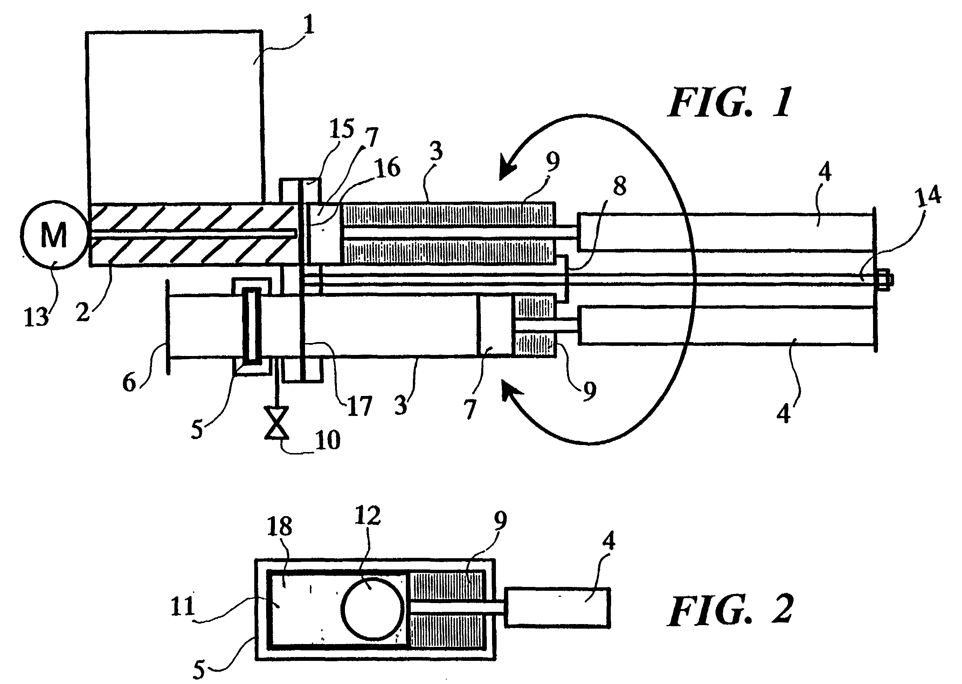

The feeder apparatus according to the invention is constructed about a base plate 15. A fill chute 1 operated at atmospheric pressure is connected to feed cylinders via an auger feeder 2 attached to the base plate 15 and the base plate 15 is provided with a fill inlet opening 16 located to coincide with the outlet of the auger feeder 2. The auger feeder 2 is rotated by means of a motor 13. On the same side of the base plate 15, so as to coincide with another opening, a feed outlet opening 17, is adapted a nozzle 6 exiting in the pressurized space.
A sliding gate valve 5 is adapted to the nozzle 6 close to the base plate 6. The gate valve 5 is shown in Fig. 2, and in the illustrated embodiment the sliding gate valve 5 comprises a sliding plate 11 adapted to move in a linear fashion in a sealed seat, whereby the slide plate is provided with an opening 12 of the same size as the outlet opening of the base plate 15 and a contiguous area 18 sufficiently large to cover the base plate outlet opening 17. The sliding plate 11 is moved by means of a hydraulic cylinder 4 and the space of the sealed seat remaining about the sliding plate 11 is filled with a sealing liquid 9. The sealing liquid is adapted to flow inside the gate valve 5 so that the liquid 9 always fills the free volume in the sealed seat as the position of the sliding plate 11 is varied. To the nozzle 6 is also connected a pressurization/depressurization nozzle 10 located between the base plate 15 and the sliding gate valve 5.

To the opposite side of the base plate 15 are adapted two feed cylinders 3. The feed cylinders 3 are rotatably mounted in bearings supported by the base plate 15 and a shaft 14. The feed cylinders 3 are adapted to abut the base plate 15 so that when one of the cylinders 3 is coincident with the cylinder inlet opening 16 of the base plate 15, the other cylinder is coincident with the cylinder outlet opening 17 of the base plate. Either of the feed cylinders 3 is provided with a piston 7 which is reciprocatingly movable inside the bore of the cylinder 3 by means of hydraulic cylinder 4, whereby the rods of the hydraulic cylinders are adapted to be coaxial with their respective cylinders 3. The hydraulic cylinders 4 are adapted to feeder construction so as to be supported by the shaft 14. The free space remaining about the piston rods behind the pistons 7 of the feed cylinders 3 is filled with a sealing liquid 9, and these sealing liquid spaces are joined with each other by means of a connecting pipe 8.

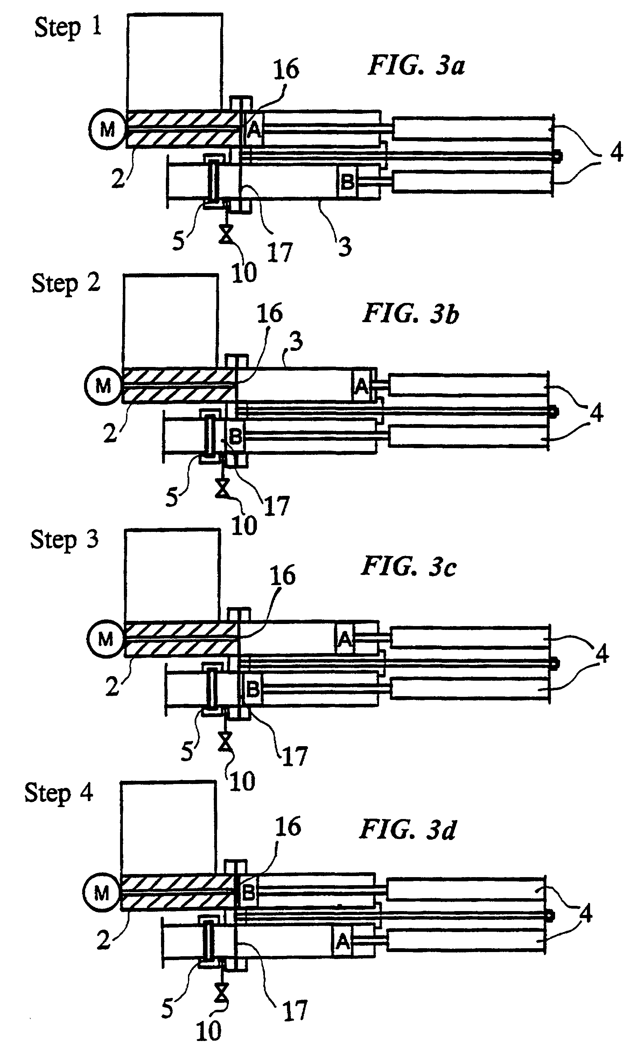

The operating steps of the feeder apparatus are elucidated in Figs. 3a - 3d. For greater clarity, the pistons 7 are marked with reference letters A and B in these diagrams. In the first step the cylinder of piston B is shown rotated coincident with the outlet opening 17 and the feed cylinder 3 is full of the material being fed. During this step, the space remaining between piston B and the sliding gate valve 5 is pressurized by means of gas fed via the pressurizing nozzle 10, or alternatively, by pushing piston B forward, whereby the space between the piston and the sliding gate valve is reduced and the pressure in the space is elevated. Here, piston A is moved backward and the displacement of its cylinder 3 is filled with the material fed by the auger feeder 2. After the cylinder pressurization phase in completed, the sliding gate valve 5 is opened and the material being fed is discharged into the pressurized space by moving piston B forward. Simultaneously, piston A is moved backward and the displacement of its cylinder 3 is filled with the material fed by the auger feeder 2. The mutually synchronized movement of pistons A, B is easy to implement by synchronizing the operation the hydraulic cylinders 4 actuating the pistons. While the pressurizing gas can be selected quite freely, at least inert gases and mixtures thereof as well as steam are most suited for use as pressurizing media.

In the second step piston B has already discharged the material into the pressurized space and the auger feeder 2 has filled the cylinder 3 of piston A. Next, the sliding gate valve 5 is closed. After the closure of the valve 5, the third step is initiated, whereby pressure in the cylinder of piston B is first lowered prior to starting the rotating transfer movement of the cylinders. The pressure reduction is performed either by moving piston B slightly backward, whereby the volume between the piston and the valve 5 increases and the pressure decreases. As said pressurized volume is small, a very short retraction of the piston is sufficient to lower the pressure sufficiently for the subsequent rotating transfer phase of the cylinders. However, the equivalent forward movement of piston A corresponding to the retraction of piston B causes no discernible pressure increase in the cylinder of piston A, because the volume in the cylinder of piston A is now appreciably larger than the volume expanded in the other cylinder. Instead of moving the pistons, the pressure reduction may be implemented via the pressure relief nozzle 10, whereby the pressure reduction takes place during the same step as if moving the pistons. After the pressure reduction phase, the feed cylinders 4 with their hydraulic cylinders 4 are rotatingly transposed about the shaft 14 by 180°, whereby the fill/discharge cycle can be restarted from the beginning.

To reduce wear of the apparatus and seal the apparatus, lubricating/flushing liquid 9 is used in the sliding gate valve 5 and the feed cylinder 3. This liquid lubricates the moving parts of the apparatus and collects particles of the material being fed that have possibly leaked past the seals thus appreciably reducing abrasion caused by such particles. The lubricating liquid may be filtered during operation, whereby impurities accumulated in the liquid are removed. The pressure of the liquid may be kept above the ambient pressure, whereby in principle no solids can enter the space filled with the liquid. The lubricating/flushing liquid may advantageously be water which has no deleterious effect in conjunction with the material being fed. Obviously, other lubricating agents are suitable.

Besides those represented above, the present invention may have alternative embodiments. For instance, the two feed cylinders can be replaced by a greater number of cylinders. When the number of cylinders is increased, even total numbers of cylinders are preferred to odd numbers, because even numbers of cylinders make it easier to arrange the flows of hydraulic fluid and lubricating liquid between the cylinders. In principle the method could also be applied to a single feed cylinder, while in such a case the construction of the apparatus hardly becomes simpler, but rather, its efficiency is impaired. The linear-movement sliding gate valve can be replaced, e.g., by a sliding gate member moving along a curved path or a gate valve comprising a circular rotatable gate plate having one or more openings made to it. The auger feeder is not essential to the function of the invention; the material fill into the feed cylinders may be arranged by gravity or a suitable type of force-actuated feeder.

## Claims

1. A method of feeding solid material into a pressurized space using a feeder apparatus comprising
- a base plate (15) having at least one fill inlet opening (16) and at least one feed outlet opening (17),
- at least one feed cylinder (3) having a piston (7) for varying the volume of the feed cylinder (3); and
- means for rotatingly moving the feed cylinder (3) from the inlet opening (16) to the outlet opening (17) and back,
in which method
- filling the material being fed into a process first via the inlet opening to the feed cylinder (3),
- transferring the feed cylinder (3) by a rotating movement to coincide with the outlet opening (17), and
- discharging the material being fed by means of the piston (7) of the feed cylinder (3) into the pressurized space,
**characterized** in that
- keeping the communication via the outlet opening (17) to the pressurized space closed during the transfer movement of the feed cylinder (3),
- keeping the pressure in the feed cylinder (3) lower than that of the pressurized space during the transfer movement of the feed cylinder (3),
- elevating the pressure inside the feed cylinder (3) after the rotating transfer movement and prior to the feed of the material into said pressurized space, and opening the communication to said pressurized space after elevating the pressure inside the feed cylinder.
- closing the communication via the outlet opening (17) to the pressurized space and lowering the pressure inside the feed cylinder after the ram movement of the piston (7) of the feed cylinder (3) is stopped.

2. A method as defined in claim 1, **characterized** in that the pressure inside the feed cylinder (3) is elevated by moving the piston (7) of the cylinder toward said base plate (15).

3. A method as defined in claim 1, **characterized** in that the pressure inside the feed cylinder (3) is elevated by passing pressurized medium such as a gas into the feed cylinder.

4. A method as defined in any foregoing claim, **characterized** in that the pressure inside the feed cylinder (3) is lowered by moving the piston (7) of the cylinder farther away from said base plate (15).

5. A method as defined in any foregoing claim, **characterized** in that the pressure inside the feed cylinder (3) is lowered by discharging pressurized medium such as a gas from the feed cylinder.

6. An apparatus for feeding solid material into a pressurized space, said apparatus comprising
- a base plate (15) having at least one fill inlet opening (16) and at least one feed outlet opening (17),
- at least one feed cylinder (3) having a piston (7) for varying the volume of the feed cylinder (3); and
- means for rotatingly moving the feed cylinder (3) from the inlet opening (16) to the outlet opening (17) and back,
**characterized** by
- a gate element (5) for closing the communication via the outlet opening (17) to the pressurized space,
- means (7) for elevating the pressure in the feed cylinder (3) when the feed cylinder (3) is positioned at the outlet opening (17) and the gate element is closed, and
- means for lowering the pressure in the feed cylinder (3) when the feed cylinder (3) is positioned at the outlet opening (17) and the gate element is closed.

7. An apparatus as defined in claim 6, **characterized** in that the number of said feed cylinders (3) is two and they are adapted in conjunction with said base plate (15) so that when one of the feed cylinders (3) is coincident with the cylinder inlet opening (16) of the base plate, the other cylinder is respectively coincident with the outlet opening (17) of the base plate.

8. An apparatus as defined in claim 6 or 7, **characterized** in that said gate element is a sliding gate valve (5), in which the free space of the sealed seat remaining about the sliding gate element (11) is filled with a sealing liquid (9) whose volume is varied according to the movements of the sliding gate element.

9. An apparatus as defined in claim 7 or 8, **characterized** in that the free space remaining about the piston rods behind the pistons (7) of the feed cylinders (3) is filled with a sealing liquid (9) and these sealing liquid spaces are joined with each other by means of at least one connecting pipe (8), whereby the liquid can flow via the connecting pipe from one liquid space to the other according to the movements of the pistons (7).

10. An apparatus as defined in claim 8 or 9, **characterized** in that said sealing liquid is maintained at a pressure above the ambient pressure.

11. An apparatus as defined in any of claims 8 - 10, **characterized** in that said liquid is water.

## Patentansprüche

1. Verfahren zum Zuführen von festem Material in einen unter Druck stehenden Raum, wobei ein Zuführgerät verwendet wird, welches umfaßt:
- eine Basisplatte (15), die zumindest eine Fülleinlaßöffnung (16) und zumindest eine Zuführauslaßöffnung (17) besitzt,
- zumindest einen Zuführzylinder (3), der einen Kolben (7) besitzt, um das Volumen des Zuführzylinders (3) zu variieren; und
- eine Einrichtung zum drehbaren Bewegen des Zuführzylinders (3) von der Einlaßöffnung (16) zur Auslaßöffnung (17) und zurück,
wobei das Verfahren umfaßt:
- Füllen des Materials, welches einem Prozeß zuzuführen ist, zuerst über die Einlaßöffnung zum Zuführzylinder (3),
- Befördern des Zuführzylinders (3) durch eine Drehbewegung, damit dieser sich mit der Auslaßöffnung (17) deckt, und
- Entladen des zuzuführenden Materials mittels des Kolbens (7) des Zuführzylinders (3) in den unter Druck stehenden Raum,
**gekennzeichnet durch**
- Geschlossenhalten der Verbindung über die Auslaßöffnung (17) in den unter Druck stehenden Raum während der Beförderungsbewegung des Zuführzylinders (3),
- Halten des Drucks im Zuführzylinder (3) niedriger als den des unter druckstehenden Raums während der Beförderungsbewegung des Zuführzylinders (3),
- Anheben des Drucks innerhalb des Zuführzylinders (3) nach der Drehbeförderungsbewegung und vor der Zufuhr des Materials in den unter Druck stehenden Raum und Öffnen der Verbindung zu dem unter Druck stehenden Raum nach Anheben des Drucks innerhalb des Zuführzylinders,
- Schließen der Verbindung über die Auslaßöffnung (17) zu dem unter Druck stehenden Raum und Absenken des Drucks innerhalb des Zuführzylinders, nachdem die Kolbenbewegung des Kolbens (7) des Zuführzylinders (3) angehalten ist.

2. Verfahren nach Anspruch 1, **dadurch gekennzeichnet**, daß der Druck innerhalb des Zuführzylinders (3) durch Bewegen des Kolbens (7) des Zylinders in Richtung auf die Basisplatte (15) angehoben wird.

3. Verfahren nach Anspruch 1, **dadurch gekennzeichnet**, daß der Druck innerhalb des Zuführzylinders (3) durch Zuführen von unter Druck stehendem Medium, beispielsweise eines Gases, in den Zuführzylinder angehoben wird.

4. Verfahren nach einem vorhergehenden Ansprüche, **dadurch gekennzeichnet**, daß der Druck innerhalb des Zuführzylinders (3) durch Bewegen des Kolbens (7) des Zylinders weiter weg von der Basisplatte (15) abgesenkt wird.

5. Verfahren nach einem vorhergehenden Ansprüche, **dadurch gekennzeichnet**, daß der Druck innerhalb des Zuführzylinders (3) durch Entladen von unter Druck stehendem Medium, beispielsweise eines Gases, aus dem Zuführzylinder abgesenkt wird.

6. Gerät zum Zuführen von festem Material in einen unter Druck stehenden Raum, wobei das Gerät umfaßt:
- eine Basisplatte (15), die zumindest eine Fülleinlaßöffnung (16) und zumindest eine Zuführauslaßöffnung (17) besitzt,
- zumindest einen Zuführzylinder (3), der einen Kolben (7) besitzt, um das Volumen des Zuführzylinders (3) zu variieren; und
- eine Einrichtung, um den Zuführzylinder (3) von der Einlaßöffnung (16) zur Auslaßöffnung (17) und zurück drehbar zu bewegen,
gekennzeichnet durch
- ein Ventilelement (5), um die Verbindung über die Auslaßöffnung (17) zum unter Druck stehenden Raum zu verschließen,
- eine Einrichtung (7), um den Druck im Zuführzylinder (3) anzuheben, wenn der Zuführzylinder (3) an der Auslaßöffnung (17) angeordnet und das Ventilelement geschlossen ist, und
- eine Einrichtung, um den Druck im Zuführzylinder (3) abzusenken, wenn der Zuführzylinder (3) an der Auslaßöffnung (17) angeordnet und das Ventilelement geschlossen ist.

7. Gerät nach Anspruch 6, **dadurch gekennzeichnet**, daß die Anzahl der Zuführzylinder (3) zwei ist und diese zusammen mit der Basisplatte (15) angepaßt sind, so daß, wenn einer der Zuführzylinder (3) sich mit der Zylindereinlaßöffnung (16) der Basisplatte deckt, der andere Zylinder sich entsprechend mit der Auslaßöffnung (17) der Basisplatte deckt.

8. Gerät nach Anspruch 6 oder 7, **dadurch gekennzeichnet**, daß das Ventilelement ein Schieberabsperrventil (5) ist, bei dem der freie Raum des abgedichteten Sitzes, der um das Schieberventilelement (11) verbleibt, mit einer Dichtflüssigkeit (9) gefüllt ist, dessen Volumen gemäß den Bewegungen des Schieberventilelements variiert wird.

9. Gerät nach Anspruch 7 oder 8, **dadurch gekennzeichnet**, daß der freie Raum, der um die Kolbenstäbe hinter den Kolben (7) der Zuführzylinder (3) bleibt, mit einer Dichtflüssigkeit (9) gefüllt ist und diese abgedichteten Flüssigkeitsräume miteinander mittels zumindest eines Verbindungsrohrs (8) verbunden sind, wodurch die Flüssigkeit über das Verbindungsrohr von einem Flüssigkeitsraum zum anderen gemäß den Bewegungen der Druckkolben (7) fließen kann.

10. Gerät nach Anspruch 8 oder 9, **dadurch gekennzeichnet**, daß die Dichtflüssigkeit bei einem Druck über dem Umgebungsdruck gehalten wird.

11. Gerät nach einem der Ansprüche 8 bis 10, **dadurch gekennzeichnet**, daß die Flüssigkeit Wasser ist.

## Revendications

1. Procédé d'introduction d'une matière solide dans un espace sous pression, au moyen d'un appareil de distribution comprenant :
une plaque de base (15) ayant au moins un orifice d'entrée de remplissage (16) et au moins un orifice de sortie de distribution (17),
au moins un cylindre de distribution (3) comportant un piston (7) pour faire varier le volume du cylindre de distribution (3) ; et
des moyens de déplacement par rotation du cylindre de distribution (3), de l'orifice d'entrée (16) à l'orifice de sortie (17) et retour,
le dit procédé comprenant :
le remplissage de la matière à introduire dans un processus, d'abord via l'orifice d'entrée au cylindre de distribution (3),
le transfert du cylindre de distribution (3) par un mouvement de rotation de sorte qu'il vienne coïncider avec l'orifice de sortie (17), et
la décharge de la matière à distribuer, au moyen du piston (7) du cylindre de distribution (3), dans l'espace sous pression,
caractérisé en ce que :
la communication avec l'espace sous pression, via l'orifice de sortie (17), est maintenue fermée pendant le mouvement de transfert du cylindre de distribution (3),
la pression dans le cylindre de distribution (3) est maintenue plus basse que celle de l'espace sous pression pendant le mouvement de transfert du cylindre de distribution (3),
la pression à l'intérieur du cylindre de distribution (3) est augmentée après le mouvement de transfert rotatif et avant l'introduction de la matière dans le dit espace sous pression, et la communication vers le dit espace sous pression est ouverte après augmentation de la pression à l'intérieur du cylindre de distribution, et
la communication avec l'espace sous pression via l'orifice de sortie (17) est fermée et la pression à l'intérieur du cylindre de distribution est abaissée après arrêt du mouvement de poussée du piston (7) du cylindre de distribution (3).

2. Procédé selon la revendication 1, caractérisé en ce que la pression à l'intérieur du cylindre de distribution (3) est augmentée par déplacement du piston (7) du cylindre vers la dite plaque de base (15).

3. Procédé selon la revendication 1, caractérisé en ce que la pression à l'intérieur du cylindre de distribution (3) est augmentée par introduction d'un fluide sous pression, tel qu'un gaz, dans le cylindre de distribution.

4. Procédé selon une quelconque des revendications précédentes, caractérisé en ce que la pression à l'intérieur du cylindre de distribution (3) est abaissée par déplacement du piston (7) du cylindre de manière à l'éloigner de la dite plaque de base (15).

5. Procédé selon une quelconque des revendications précédentes, caractérisé en ce que la pression à l'intérieur du cylindre de distribution (3) est abaissée par évacuation d'un fluide sous pression, tel qu'un gaz, du cylindre de distribution.

6. Appareil pour l'introduction d'une matière solide dans un espace sous pression, le dit appareil comprenant :
une plaque de base (15) ayant au moins un orifice d'entrée de remplissage (16) et au moins un orifice de sortie de distribution (17),
au moins un cylindre de distribution (3) ayant un piston (7) pour faire varier le volume du cylindre de distribution (3) ; et
des moyens de déplacement du cylindre de distribution (3) par rotation, de l'orifice d'entrée (16) à l'orifice de sortie (17) et retour,
caractérisé en ce qu'il comprend :
un élément obturateur (5) pour fermer la communication avec l'espace sous pression via l'orifice de sortie (17),
des moyens (7) d'augmentation de la pression dans le cylindre de distribution (3) lorsque le cylindre de distribution (3) se trouve à l'orifice de sortie (17) et que l'élément obturateur est fermé, et
des moyens d'abaissement de la pression dans le cylindre de distribution (3) lorsque le cylindre de distribution (3) se trouve à l'orifice de sortie (17) et que l'élément obturateur est fermé.

7. Appareil selon la revendication 6, caractérisé en ce que le nombre de dits cylindres de distribution (3) est de deux et ils sont agencés en association avec la dite plaque de base (15) de sorte que, lorsqu'un des cylindres de distribution (3) coïncide avec l'orifice d'entrée de cylindre (16) de la plaque de base, l'autre cylindre coïncide respectivement avec l'orifice de sortie (17) de la plaque de base.

8. Appareil selon la revendication 6 ou 7, caractérisé en ce que le dit élément obturateur est une vanne à obturateur coulissant (5) dans laquelle l'espace libre du siège d'étanchéité restant autour de l'élément obturateur coulissant (11) est rempli avec un liquide d'étanchéité (9) dont le volume varie en fonction des mouvements de l'élément obturateur coulissant.

9. Appareil selon la revendication 7 ou 8, caractérisé en ce que l'espace libre restant autour des tiges de piston à l'arrière des pistons (7) des cylindres de distribution (3) est rempli avec un liquide d'étanchéité (9) et ces espaces de liquide d'étanchéité sont reliés l'un à l'autre au moyen d'au moins un tuyau de liaison (8), de sorte que le liquide peut s'écouler via le tuyau de liaison d'un espace de liquide à l'autre en fonction des mouvements des pistons (7).

10. Appareil selon la revendication 8 ou 9, caractérisé en ce que le dit liquide d'étanchéité est maintenu à une pression supérieure à la pression ambiante.

11. Appareil selon une quelconque des revendications 8 à 10,
caractérisé en ce que le dit liquide est de l'eau.
